# EUROPEAN PATENT APPLICATION

(11) **EP 1 465 309 A2**
(43) Date of publication of application: **06.10.2004**
(21) Application number: 04076027.4
(22) Date of filing: 30.03.2004
(51) Int. Cl.: H02G 3/06, F16L 47/08

(54) **System of junctions for the connection of protective elements for electro-technical use**

(30) Priority: 01.04.2003 IT MI20030645
(71) Applicant: Inset S.p.A., 20158 Milan (IT)
(72) Inventor: Shahbazians, Vahan, 16147 Genova (IT)
(74) Representative: Coppo, Alessandro

(57) **Abstract**

A system of junctions for the connection of protective elements for electro-technical use, each junction (1, 1', 2, 2', 30, 30', 40, 40', 50, 50') of the system comprising a body (11, 32) in plastic material and a gasket (13, 34) in elastomeric material or in thermoplastic elastomer, the body (11, 32) and the gasket (13, 34) integrated through adhesion guaranteed by chemical affinity between the materials such that it forms a connection that achieves the mechanical seal and prevents the entrance of external agents.

## Description

The present invention concerns a system of junctions for the connection of protective elements for electro-technical use.

In particular the invention concerns a system of connecting junctions in plastic material that permits the connection between rigid and/or corrugated tubes, flexible sheaths and electrical boxes or panels in all of their technological combinations used in electrical wiring.

More precisely, the system of junctions according to the invention concerns a junction or connection sleeve between rigid and/or corrugated tubes, a curved junction between rigid and/or corrugated tubes, a junction between a rigid or corrugated tube and a flexible sheath, a junction between a rigid or corrugated tube or a flexible sheath and a box or panel, such as a command box, a derivation box and similar items.

By rigid tube it is intended a protective rigid tube, achieved in plastic material.

By corrugated tube it is intended a protective, flexible tube in plastic material comprising corrugations constituted by annular teeth, each of which provided with two annular side walls which extend radially with respect to the tube axis.

By (spiralled) flexible sheath it is intended a flexible conduit in plastic material, in which a spiral is inserted, achieved for example in rigid PVC material in order to increase its compression and traction strength.

The abovementioned conduits are used in the field of electrical wiring protection systems in the most varied conditions of use.

It is, in fact, good technique in electrical installations to protect cables and electrical devices which make up a civil, industrial or similar structure, housing them inside tubes, sheaths and electrical boxes, in order to isolate them, preventing infiltration from the outside environment, for example from dust, water and moisture, in addition to conferring structural protection to the same.

Over time severe regulations have been passed, designed to set and guarantee protection standards that the protective sheaths of installations must respect, and to this end sheath construction materials were optimised.

A weak point of an installation still remains the system of junctions between the various elements of the installation which must guarantee the isolation and the structural connection between elements.

According to the regulations presently in force in the electro-technical sector, the level of protection of the sheaths from external agents is defined through protection indices denominated IP.

Without wishing to enter into a detailed description, each index is made up of two numbers after the IP prefix. The first number represents the protection index against solid objects and dust, while the second number represents the protection index against liquids.

Each number may range from 0, which indicates no protection, up to 6 for solids, which signifies a strong protection from dust, or rather no entrance of dust. The number 8 for liquids signifies a protection against continuous immersion, in which the equipment may be immersed in water for a prolonged period in accordance with determinate conditions as specified by current regulations.

Such protection is considered for standard environmental conditions; naturally, special protection may be required in certain environments such as refineries, mines, blast furnaces and other similar places.

The junction must also be of simple construction, easy to install and possibly to disassemble without damages in order to consent dismantling for maintenance work or substitutions.

In particular, to simplify the assembly operations, presently all of the joints between rigid tubes, corrugate tubes, and sheaths are achieved by way of quick connect, using where necessary elastic gaskets in order to guarantee the required IP grade.

Regarding the presently known junctions, these are produced through a junction body obtained by moulding of plastic materials; such a body may be in a single piece or in several pieces to be assembled through diverse techniques, such as by interlocking joint, welding and other similar techniques.

The seal of a quick connect between rigid and/or corrugated tubes for the achievement of the required IP grade is made by inserting the gaskets into the junction in subsequent assembly operations.

Such assemblies may for example consist of the interlocking joining of the gasket in an appropriate seat.

The gasket may be simply inserted in the seat or held in the junction with the use of other plastic parts which are inserted by interlocking joining or welded, with the specific purpose of holding the gasket itself in the seat.

Regarding the connection and the seal on the flexible tube (spiralled sheath) side, two different systems are used according to known art.

A first system provides a junction with pressure connection of sheath by way of a rotary movement, without employing an elastic seal gasket.

The seal is achieved from the interference of the rigid short tube of the junction which is inserted inside the sheath itself.

A second junction of known type is equipped with threaded ring and usually spiralled elastic gasket of special form which is inserted on the outside of the spiralled sheath; the ring, screwed on the junction body, sets the sheath in the seat, the gasket thus achieving both the seal and the connection of the sheath itself.

Regarding the joining to the box or panel, at present the most diffuse system consists of the fixed or rotating junction threaded with nut, with or without lock nut, and relative seal gasket. There also exist double quick connect systems without nuts.

The joining seal of the box or panel is accomplished by the insertion, between the junction and the walls of the box, of elastic gaskets of commercial O-ring type, or flat or round-section gaskets moulded in plastic material or flat-section gaskets sheared from extruded bars in plastic material.

The presently known systems present a series of drawbacks both of production type and for the installer.

At the production centre, the drawbacks which are manifested in the junctions according to known art are to be ascribed to the fact that the production of junctions conceived as moulding of several pieces in plastic material and their assembly using also third party items, renders expensive the production process itself, due to the flow of various materials and/or semi-finished products, and due to moulding and assembly quality control.

The process of transformation and assembly requires in addition the use of several presses for the moulding and assemblage of the various parts constituting the same item, the use of specific automatic machines, or increased use of non-specialised, low-quality manpower, with all the consequent problems of management and quality control.

Regarding the installation, the junctions of known type present different drawbacks according to the type of connection.

In the seal on the side of the rigid or corrugated tube, during electrical installation construction, at the disengagement of the tube from the junction the gasket often comes out of its seat, leading to considerable inconvenience for the installer who must slip off the gasket and reinsert it into the junction.

For the tolerances permitted by current regulations on tube diameters, present junctions are made in such a manner that those produced with the single fixed gasket present considerable clearances such that the inserted rigid tube has a higher mobility.

The gaskets fixed by welding or interlocking of an additional piece have on the other hand little flexibility in the variation of the diameter of the rigid tube, proving at times unusable or difficult to use because of the tube's high tolerance, or with IP protection level unreliable due to the lower tolerance of the tube.

The gaskets held in their seat in the junction by way of welding or interlocking of an additional piece, at times by incorrect assembly operation (which often comes in a manual and not very professional manner), end up outside the seat, rendering the junction itself unusable.

The seal on the side of the spiralled sheath is achieved through the pressure insertion of the sheath on the rigid short tube of the junction without use of any elastic gasket; in addition to having an unreliable IP level of protection, once the sheath is inserted it proves absolutely impossible to dismantle, creating an enormous inconvenience for the installer. In addition the internal short tube projecting from the body of the junction is rigid and not flexible, and in applications where there is a movement of the spiralled sheath, for example in installations on machines, the sheath is quickly cut from the inside.

On the other hand, the junction with the seal with the ring and gasket has several pieces to assemble in work by the installer, and in addition the spiralled gasket in soft plastic material proves to be extremely difficulty to insert into the spiralled sheath, which in addition to requiring more time for installation, also necessitates a greater attention to correct assembly, or else the junction will lack mechanical seal.

Another aspect of this junction is that it joins a spiralled sheath and rigid tube of nominally different diameters, creating confusion for the installer for example when the rigid tube of 20 mm diameter is joined to the sheath of 16 mm diameter.

Regarding the seal on the side of the box, the gaskets used (commercial O-rings, sheared rings, and similar items) have a higher variability of type (shape, material, size, thickness) rendering the correct use of the junction and its IP protection level unreliable. In addition, the gaskets often disassemble during use, creating problems for the installer.

The general object of the present invention is, therefore, to supply a system of junctions that permit overcoming the above-mentioned drawbacks of the known art, summarised below:
- detachable gaskets;
- incorrectly assembled gaskets;
- not very flexible tolerances;
- unreliable level of IP protection;
- not very rigid tube-junction system;
- spiralled sheath system impossible to dismantle;
- assembly of junctions to be carried out in work by the installer;
- junctions built by several assembled parts;
- management and cost of assembly of the semi-finished products;
- poor quality of the assemblies;
- ergonomics not considered.

These and other objects according to the present invention are achieved by a system of junctions for the connection of protective elements for electro-technical use according to that described in claim 1.

Further characteristics of the invention form the object of the dependent claims.

The system of junctions for the connection of protective elements for electro-technical use according to the invention comprises, for each junction, a body in plastic material and a gasket in elastomeric material or thermoplastic elastomer, the body and the gasket integrated through adhesion guaranteed by chemical affinity between the materials such that it forms a connection that achieves the mechanical seal and prevents the entrance of external agents.

The characteristics and advantages of a system of junctions according to the present invention will be more evident from the following illustrative and nonlimiting description, referred to the attached schematic drawings in which:
- figures 1a and 1b are schematic perspective views of an element of the system of junctions according to two embodiments of the invention;
- figures 2a and 2b are plan views of the elements of figures 1a and 1b, respectively;
- figure 3a is an elevated section along the IIIa-IIIa line of figure 2a;
- figure 3b is an elevated section along the IIIb-IIIb line of figure 2b;
- figure 4b is an elevated section along the IVb-IVb line of figure 2b;
- figure 5a and 5b are schematic perspective views of the elements of figures 1a and 1b applied to a different embodiment of the invention;
- figure 6 is an exploded view of a different element of the system of junctions according to the invention;
- figure 7a shows the element of figure 6 in perspective view;
- figure 8a is a view of the upper end of the element of figure 7a;

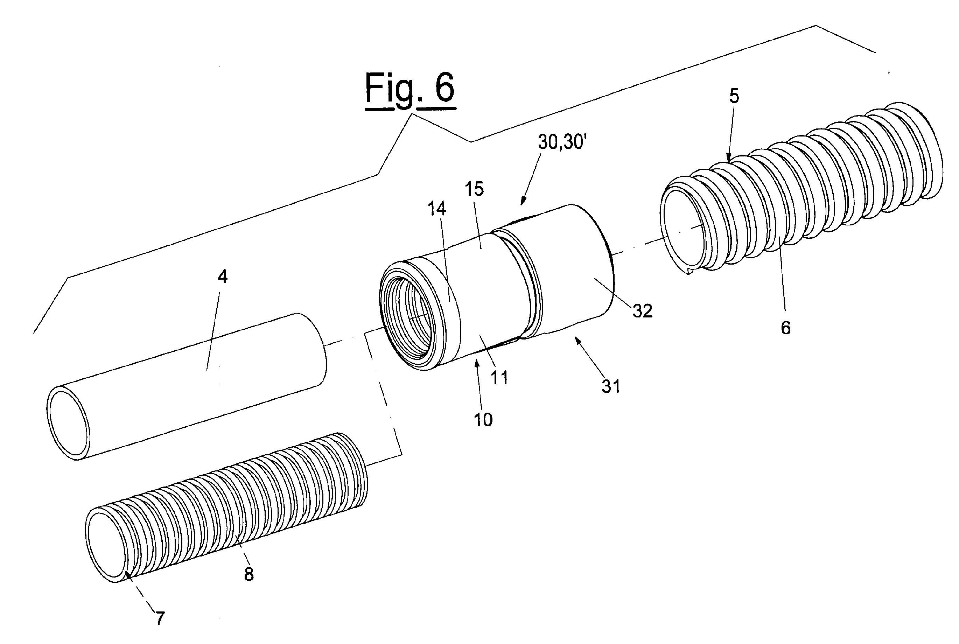

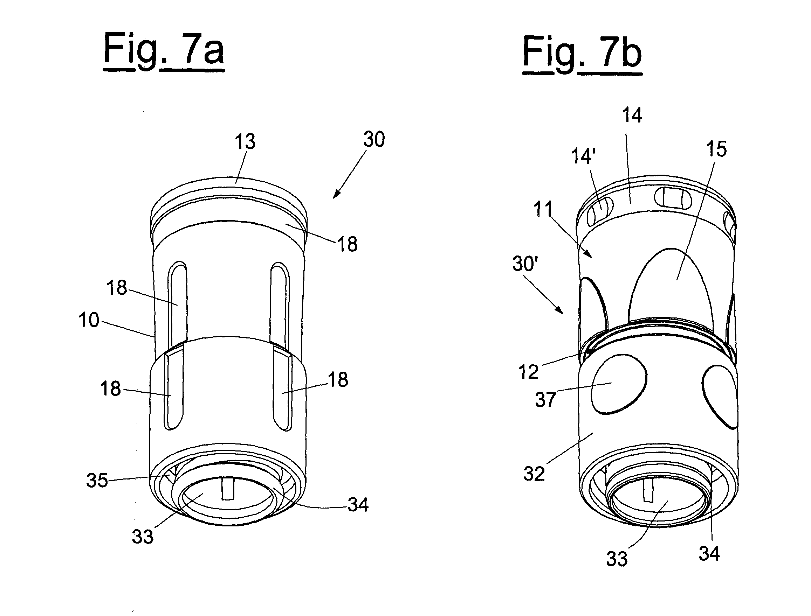

- figure 7b shows a different embodiment of the element of figure 6 in perspective view;

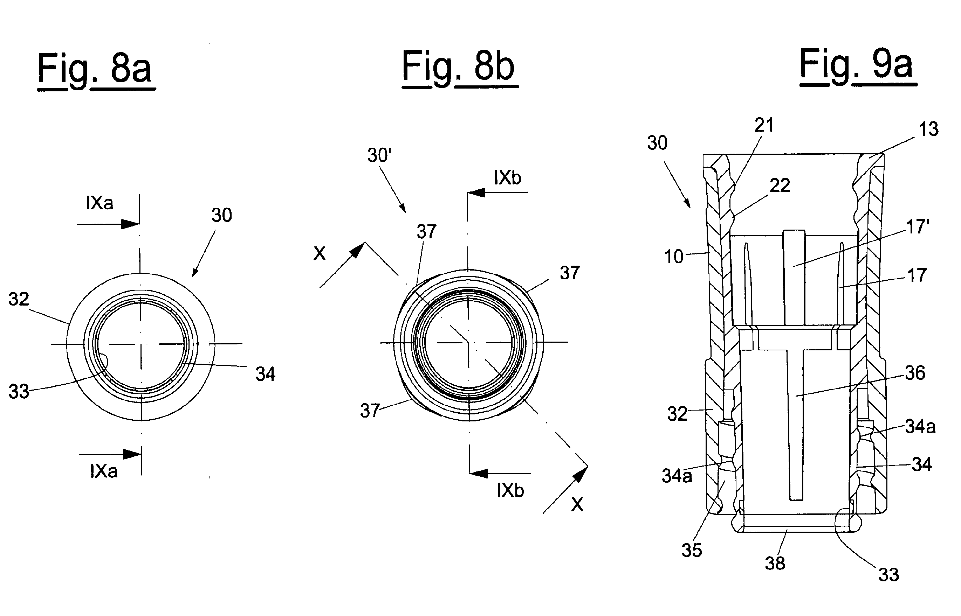

- figure 8b is a plan view from below of the element of figure 7b;
- figure 9a is an elevated section along the line IXa-IXa of figure 8a;

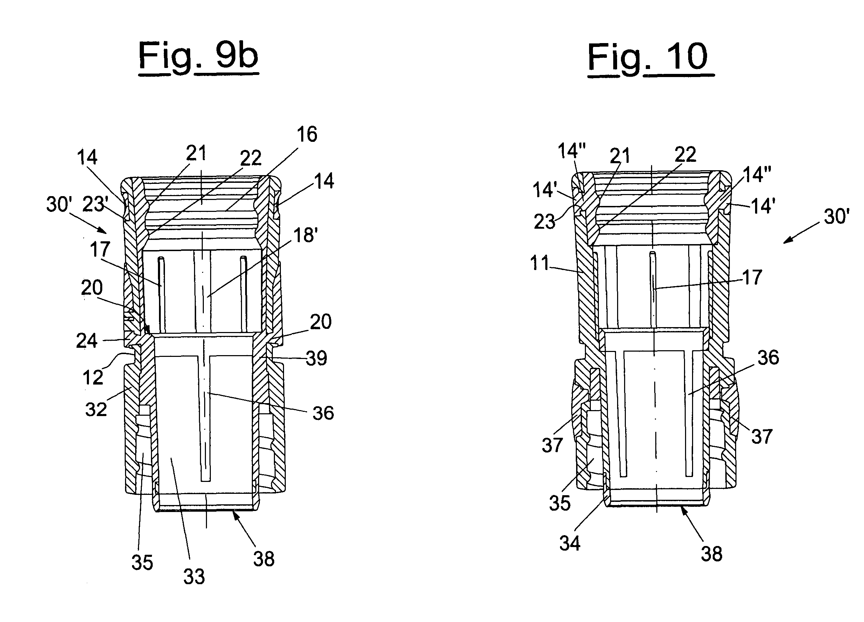

- figure 9b is an elevated section along the line IXb-IXb of figure 8b;
- figure 10 is an elevated section along the line X-X of figure 8b;

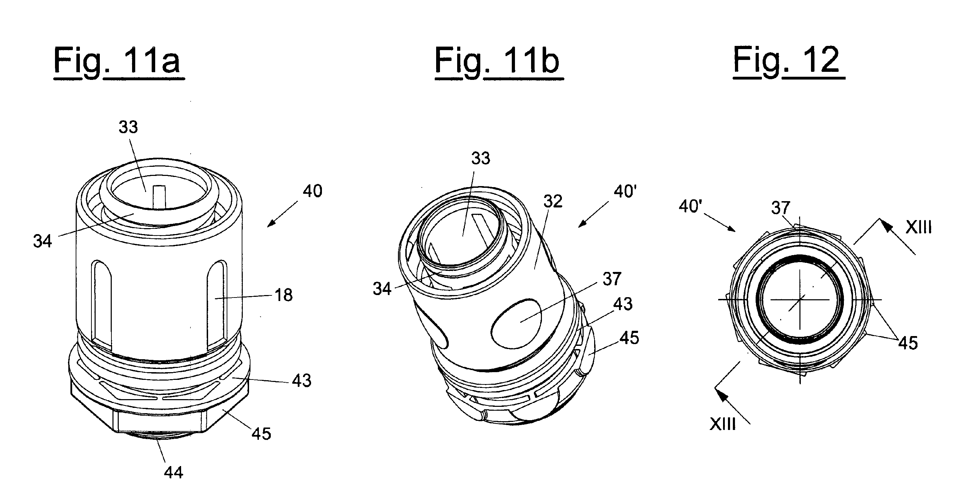

- figures 11a and 11b are perspective views of different elements of the system of junctions;
- figure 12 is a plan view from below of the element of figure 11b;

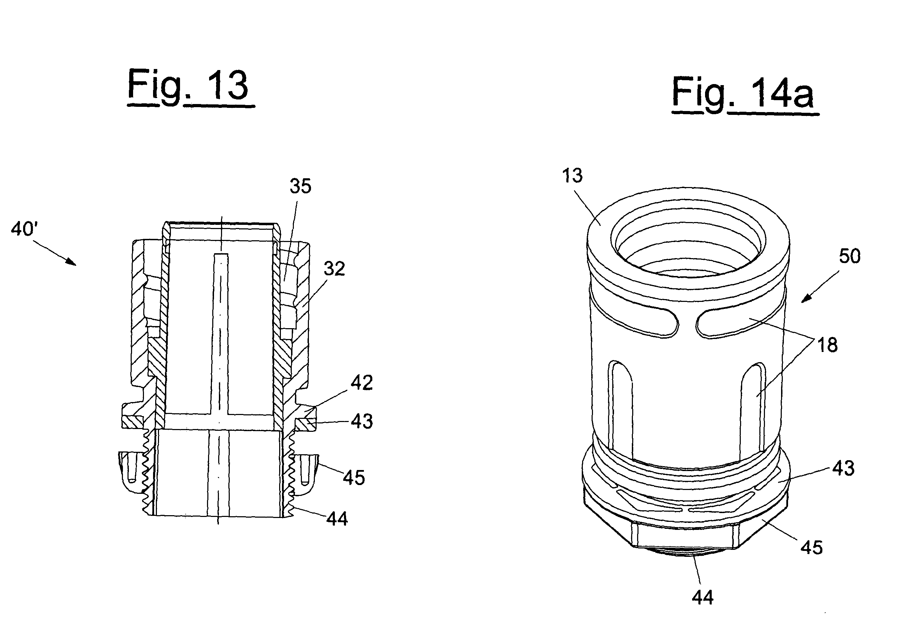

- figure 13 is an elevated section along the line XIII-XIII of figure 12;
- figure 14a is perspective view of a different embodiment of the element of figure 11a;

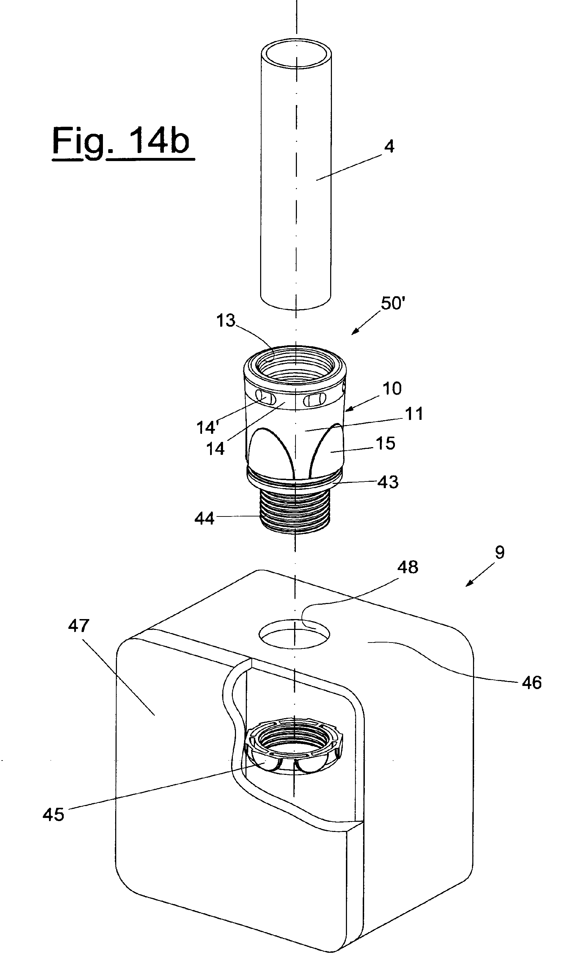

- figure 14b shows an exploded view of a different embodiment of the element of figure 11b applied to an electro-technical box or panel;

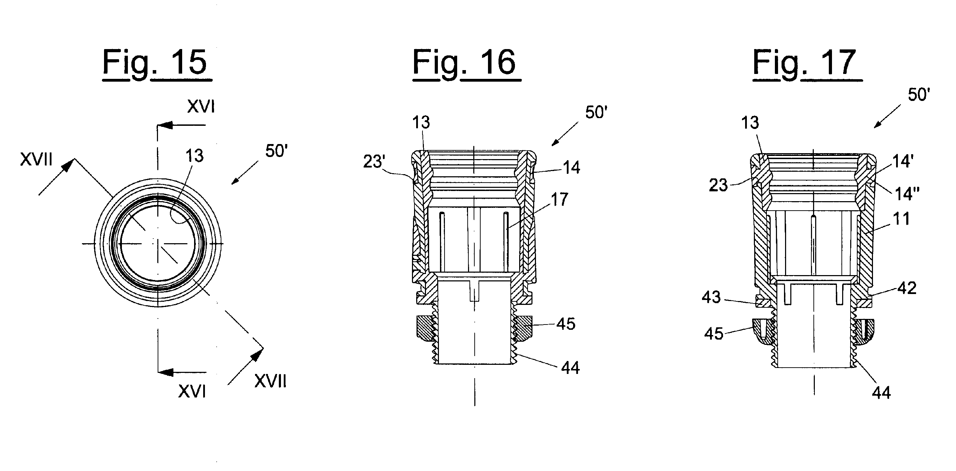

- figure 15 is a plan view of the element of figure 14b;
- figure 16 is an elevated section along the line XVI-XVI of figure 15;
- figure 17 is an elevated section along the line XVII-XVII of figure 15;

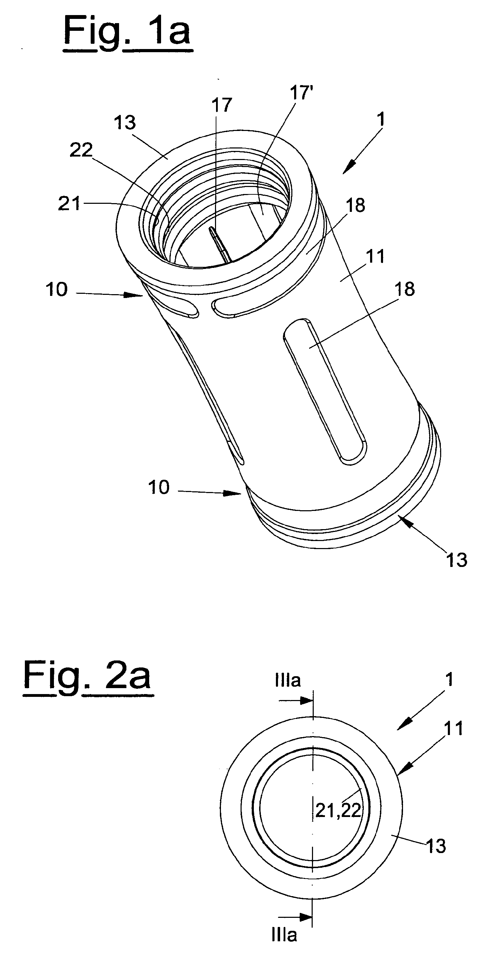

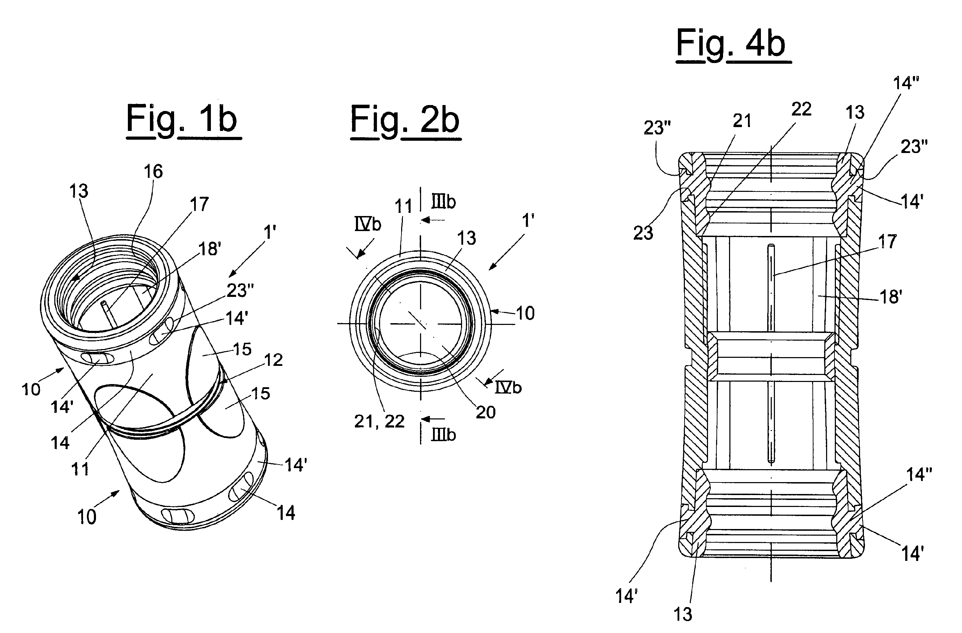

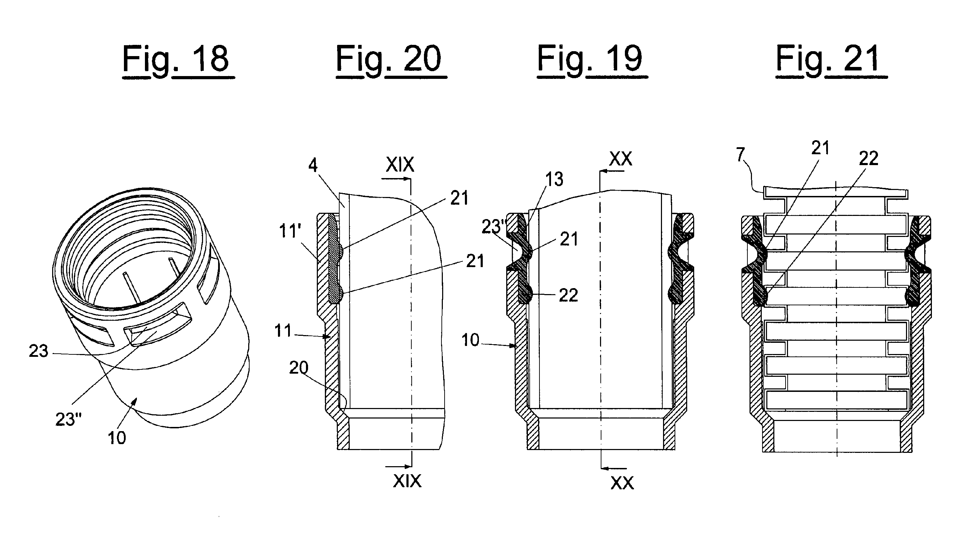

- figure 18 is a partial schematic perspective view of an embodiment of the body of the elements of figures 1a, 1b;
- figure 19 is an elevated section along the line XIX-XIX of figure 20;
- figure 20 is an elevated section along the line XX-XX of figure 19;
- figure 21 is an elevated section as in figure 19 with a corrugated tube inserted in the element of the system of junctions;

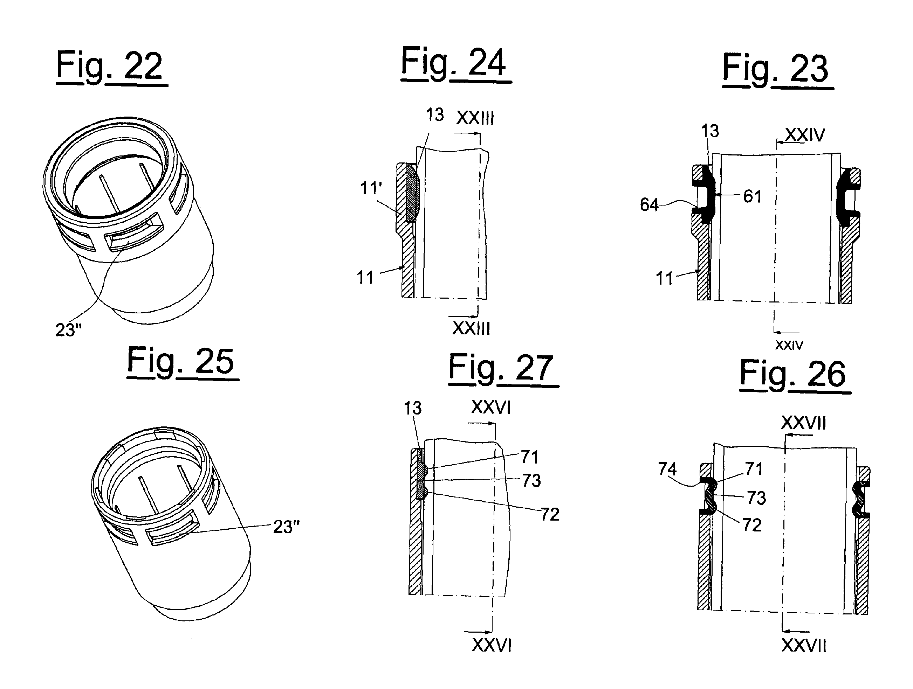

- figure 22 is a partial schematic perspective view of another embodiment of the body of the elements of figures 1a, 1b;
- figure 23 is an elevated section along the line XXIII-XXIII of figure 24;
- figure 24 is an elevated section along the line XXIV-XXIV of figure 23;
- figure 25 is a partial schematic perspective view of another embodiment of the body of the elements of figures 1a, 1b;
- figure 26 is an elevated section along the line XXVI-XXVI of figure 27;
- figure 27 is an elevated section along the line XXVII-XXVII of figure 26;

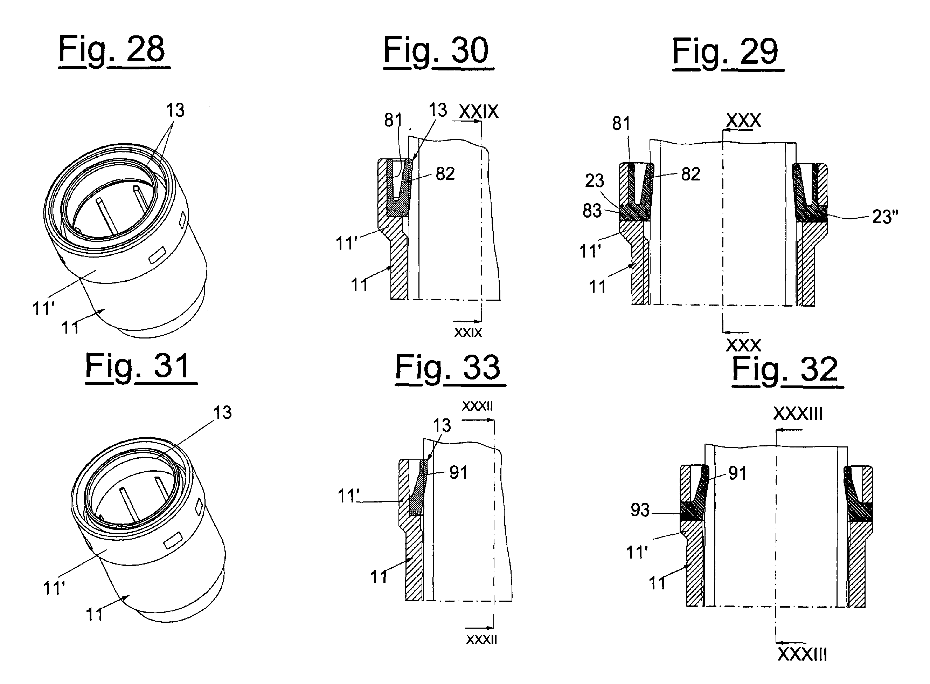

- figure 28 is a partial schematic perspective view of another embodiment of the body of the elements of figures 1a, 1b;
- figure 29 is an elevated section along the line XXIX-XXIX of figure 30;
- figure 30 is an elevated section along the line XXX-XXX of figure 29;
- figure 31 is a partial schematic perspective view of another embodiment of the body of the elements of figures 1a, 1b;
- figure 32 is an elevated section along the line XXXII-XXXII of figure 33;
- figure 33 is an elevated section along the line XXXIII-XXXIII of figure 32;

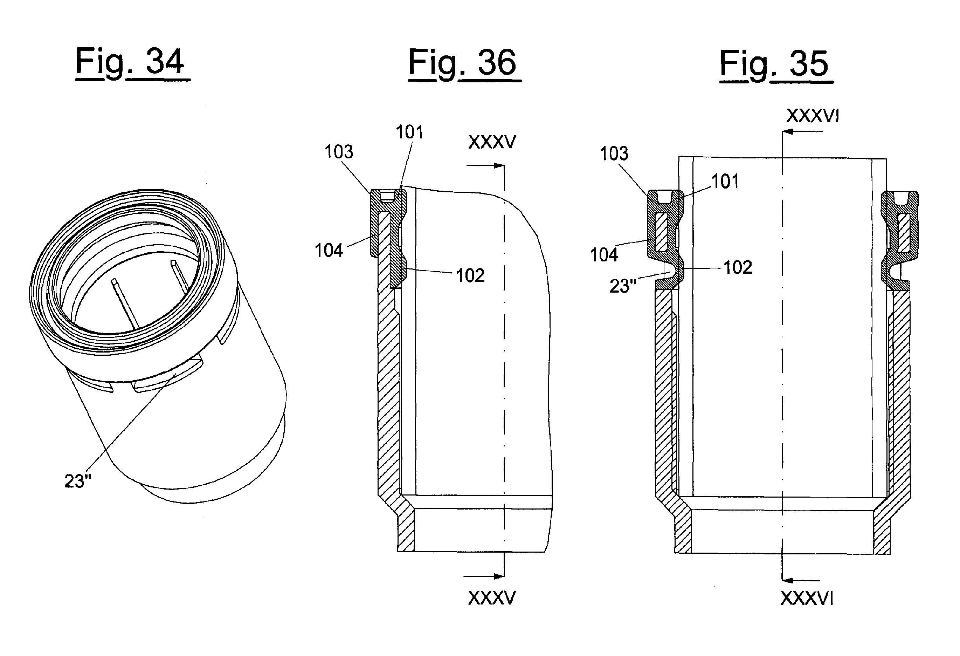

- figure 34 is a partial schematic perspective view of another embodiment of the body of the elements of figures 1a, 1b;
- figure 35 is an elevated section along the line XXXV-XXXV of figure 36;
- figure 36 is an elevated section along the line XXXVI-XXXVI of figure 35;
- figures from 37A - 37F are partial schematic sections of six different gasket embodiments of the elements of figures 1a, 1b;

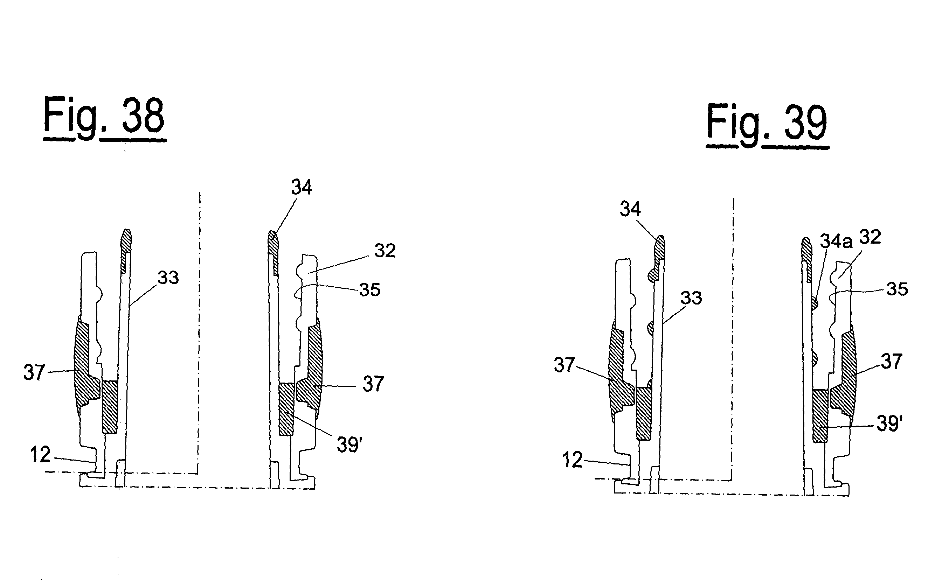

- figures 38 and 39 illustrate in schematic section a detail of the element of figure 6 and one of its created variants, respectively.

With reference to the figures, a system of junctions for the connection of protective elements achieved in plastic material for electro-technical use comprises a plurality of junction elements adapted to the diverse typologies of application, in particular such a system comprises a tube-tube junction or sleeve 1, 1' for the connection between rigid tubes 4 and/or corrugated tubes 7, i.e. provided with corrugations 8; a curved tube-tube junction 2, 2' for joining between them, preferably at 90°, 45° or 30°, two rigid tubes 4 and/or corrugated tubes 7; a spiralled tube-sheath 30, 30' for connecting a rigid tube 4 or a corrugated tube 7 and a spiralled sheath 5, i.e. provided superficially with a spiral 6 in rigid material, e.g. PVC; a spiralled sheath - box junction 40, 40', and a tube - box junction 50, 50' for the connection, respectively, of a spiralled sheath 5 or a rigid tube 4 or corrugated tube 7 with a box or panel 9.

More precisely, the junctions 1, 2, 30, 40, and 50 of such a system have the common characteristic of integrating in a single piece by adhesion, guaranteed by the chemical affinity of the materials, the rigid structural part or body of the junction with the elastomeric part of the gasket and seal. The junctions also have the common characteristic of being ergonomically functional, thanks to advanced moulding techniques of the plastic materials.

The junctions 1', 2', 30', 40', and 50' integrate a different embodiment of the system of junctions according to the invention, in which, with the object of increasing the stability of the connection, the junctions present, in addition to adhesion by chemical affinity of the materials, also the interlocking engagement of the elastomeric gasket in the body in plastic material.

With particular reference to figures 1a, 2a, and 3a, the tube-tube junction or sleeve 1 has a hollow, cylindrical body 11, symmetric with respect to the median plane and substantially comprises two tube connection elements 10 on opposite ends, united by way of a neck 12.

The body 11, the tube connection elements 10 and the neck 12 are achieved in a single piece through known techniques.

The tube joint elements 10 are intended for the connection of the rigid tube 4 and/or the corrugated tube 7 and to guarantee a greater seal of the same thanks to the presence of a gasket 13 achieved in elastomeric material or in thermoplastic elastomer, possibly obtained through techniques that permit the moulding by way of one or more operations such that it results integrated in the junction.

For the seal, the body 11 of the junction is achieved in rigid plastic material and is provided with an annular gasket 13 in soft plastic material with an adequate Shore A hardness.

For the adhesion of the two parts, rigid body 11 and soft gasket 13, the compatibly and chemical affinity of the materials were utilised.

The gasket 13 is achieved starting from the entrance end of the junction and to increase the seal in order to reach the IP level required by the system, there is at least one annular seal element which may be achieved in accordance with different configurations and a plurality of annular ribs 16 projecting toward the junction axis.

The gasket 13 has a first and a second lug 21 and 22 in the shape of rings of semi-circular section arranged spaced along the direction of the longitudinal axis of the junction such that a double seal is achieved.

Outside the body of the junction a plurality of longitudinal or annular grooves 18 are achieved, adapted to improve the prehension of the manufactured item.

Inside the body 11 longitudinal sections 17 and 17' are achieved in relief, serving as guide for the tube during the insertion.

In a different embodiment illustrated in the figures 1b, 2b, 3b, and 4b, with the object of further increasing the adhesion between the materials, in addition to utilising the adhesion by chemical affinity, mechanical interlocking joints are employed between the elastomeric gasket and the plastic body.

Such joints are studied in the junction's geometry and achieved during the moulding process itself.

According to each achieved variant, the body 11 of the junction 1' has, along its outer surface and in proximity to the end entrance, a circumferential groove 23', along which openings 23 are made to allow the flow of elastomeric material of the gasket 13 during the moulding step of the same.

In such a manner said gasket 13 is arranged inside the circumferential groove 23', obtaining thus a collar 14 connected to the inner portion of gasket 13 which guarantees it a greater integration with the body 11 of the junction.

The gasket 13, in fact, in addition to adhering to the inside of body 11, is engaged and held within it also by gasket collar 14 during the stress of assembly and removal of the tubes in the sleeve.

To further augment the seal of the sheath-body connection in the junction, each opening 23 is surrounded by a seat 23" adapted to receive the gasket's constituent elastomeric material such that a shank 14" is achieved, of connection between the inside and the outside of the body on which the gasket is formed, said shank 14" terminating in a head 14' which engaging in said seat 23" opposes the rotation of the collar 14 within the groove 23 and therefore of the internal portion of the gasket 13, for example during the stress of assembly or dismantling of the tubes.

The gasket 13 extends on the inside in the direction of the neck 12 of connection between the sleeves 10, determining a bottom portion 24 adapted to cover a projection 20 such that a stop is obtained for the inserted tube and to guarantee the end and side seal of the same.

The bottom portion 24 connects with the corresponding bottom portion 24 of the other sleeve on the tube side, by way of an annular portion 19 arranged to internally cover the neck 12.

In addition, the body 11 is provided with longitudinal slits 18' for the passage of the elastomeric material for the achievement of chamfer- shaped reliefs 15 to render the junction grip ergonomic.

Inside the body 11 longitudinal sections 17 are achieved in relief, serving as guide for the tube during the insertion.

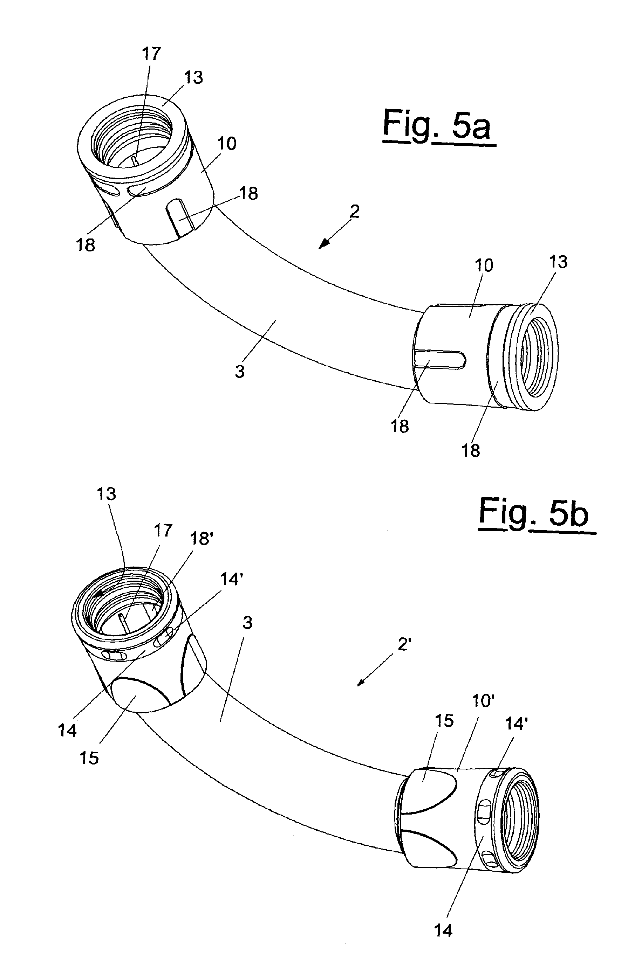

With reference to figures 5a and 5b, the curved tube-tube junctions 2 and 2' are respectively illustrated, adapted to join, preferably at 90°, 45° or 30°, two sections of rigid tube 4 and/or corrugated tube 7.

In such curved junctions, achieved in a single piece, the curved section is indicated with 3, at each end of which a tube connection element 10 is adapted to receive the tubes 4 and/or 7.

In junction 2, illustrated in figure 5a, the adhesion between the gasket and the body is guaranteed by chemical affinity, whereas in the junction 2' illustrated in figure 5b, such adhesion is additionally reinforced by interlocking engagement between the materials.

With reference to figure 6, illustrated in exploded view and generically according to the two exemplified embodiments, the tube - spiralled sheath junction 30 or 30' is intended to connect a rigid tube 4 or a corrugated tube 7 with a spiralled sheath 5.

Such a tube - spiralled sheath junction 30, 30' comprises, integrated into a single piece, the tube connection element 10 at one end and a sheath connection element 31 at the opposite end such that the connection between the two types of the above-said conduits may be carried out.

With reference also to figures 7a, 8a, and 9a, which refer to the tube - spiralled sheath junction 30 in which the adhesion between gasket and body is obtained by chemical affinity between the materials, the sheath side of the sleeve is constituted by a structural body 32 in resistant plastic material, equipped on the inside of a short tube 33 in a concentric position, partially covered by the gasket 34 achieved in the manner of the gasket 13 of the tube connection element 10.

Inside the sheath side of the sleeve 30, between structural body 32 and short tube 33 a threading 35 is achieved on the structural body, whose pitch corresponds to the spiralling 6 achieved on the sheath 5 such that this last may be connected and disconnected by screwing.

The gasket 34 does not completely cover the short tube 33, but through a plurality of longitudinal slits 36 achieved on the short tube covers the end 38 of the same which projects outside the junction, leaving free the defined sectors between adjacent slits 36.

With reference to figures 7b, 8b, 9b, and 10, which refer to the tube - spiralled sheath junction 30' in which the adhesion between gasket and body is additionally increased thanks to the interlocking engagement of the gasket in the body in plastic material, similar to that achieved in the tube connection element 10, the elastomeric material which makes the gasket 34 is made to flow across appropriate slits to obtain reliefs 37 along the outer surface of the structural body 32, in order to improve the junction's ergonomics.

A bottom portion 39 of gasket 34 is achieved in proximity of the neck 12 of connection with the tube connection element 10, uniting with the corresponding bottom portion 24 of the tube connection element 10.

For both junction embodiments, the mechanical seal is obtained from the reaction which arises from the interference between the spiralled surfaces of the rigid body of the junction and of the spiralled sheath, held in turn on the inside by the rigid short tube of the junction.

This short tube, of rigid or flexible geometry, thanks to the conformation of the gasket at its end, does not interfere with the inner surface of the spiralled sheath, and permits the sheath to be dismantled by unscrewing.

In addition, the suitable length and flexibility of the short tube inside the spiralled sheath inserted in the junction safeguards the integrity of the sheath in applications on machines.

With reference to figures 11a, 11b, 12, 13, 14a, 14b, 15, 16 and 17, two substantially similar types of junctions in the two exemplified embodiments of the invention are illustrated, the spiralled sheath - box junctions 40 and 40', and the tube - box junctions 50 and 50', such junctions permitting the connection to a box or a panel 9 of electro-technical use.

Each of the two above-said types of junctions 40, 40', and 50, 50' are achieved in a single piece and in reciprocal connection with the junction element respectively 31 or 10, and a threaded, hollow portion 44 adapted to be inserted within a hole 48 provided in a wall 46 of the box 9 which is appropriately closed by a cover 47.

The clamping of the junction to the box is carried out through a threaded ring 45 and the seal of the clamping is assured by a washer 43 achieved in elastomeric material or in thermoplastic elastomer, integrated in the junction and set around the threaded hollow portion.

In the case of the spiralled sheath - box junctions 40 and 40', such elastic washer 43 is set against a flange 42 with which the body 32 is equipped at its base.

Such elastic washer 43 is of rectangular or circular section, and is integral with the junction, always having the same position, thickness and width, assuring thus the level of IP protection.

Advantageously, the gasket 13 of the tube side of junction 1, depending on the required level of IP protection and mechanical seal, may be achieved in accordance with different configurations.

In figures 18-36 different embodiments of the connection tube elements 10 are illustrated in partial section.

With particular reference to figures 18-21 in a different embodiment of the gasket 13 it is foreseen that, on the back of the first lug 21 in proximity to the opening 23 and to the seats 23", the heads 14' are made outwardly hollow such that windows are provided to locally permit a greater dilation of the gasket of the rigid tube 4 or of the corrugated tube 7.

In such an embodiment the lugs 20, 21 are of substantially semi-circular section and the body 11 of the junction has an enlarged mouth rim 11'.

Figures 22-24 illustrate a different embodiment of the gasket 13, in which it is foreseen a single annular lug 61 of trapezoidal section which substantially extends to cover the entire surface of the seat 23"; such lug is therefore provided to contact, through its flat surface, a wide portion of tube inserted in the junction.

The gasket extends toward the outside, surrounding the seat 23" by way of circumferential edges 64 which extend, adhering to the walls of said seats 23", in a direction substantially perpendicular to the junction's longitudinal axis.

In a different embodiment shown in figures from 25-27, the gasket in the area of the openings 23" has two annular lugs 71 and 72 overlapped in longitudinal sense (substantially similar to the lugs 21 and 22) and separated by a recess 73 directed toward the outside of the seat 23".

The gasket extends toward the outside, surrounding the seat 23" by way of circumferential edges 74 which extend, adhering to the walls of said seats 23", in a direction substantially perpendicular to the junction's longitudinal axis.

In such a configuration the gasket achieves an "∑"-shaped section, i.e. like the Greek letter sigma.

In a different embodiment shown in figures 28-30, the body 11 of the junction has an enlarged mouth rim 11', inside of which the gasket 13 has a first annular portion 81 adhering to the inner surface of said mouth rim and an annular lip 82 which extends inside said first annular portion of the gasket, tilted toward the junction axis such that it achieves a substantially "V" profile to carry out the seal of the tube inserted in the junction.

In proximity of the openings and the seats the gasket extends toward the outside of the junction by way of circumferential edges 83, which extend, adhering to the walls of said seats 23", in a direction substantially perpendicular to the junction's longitudinal axis.

In a different embodiment shown in figures 31-33, the body 11 of the junction has an enlarged mouth rim 11', inside of which the gasket 13 has, analogous to the embodiment just described and illustrated in figures 28-30, an annular lip 91 which extends inside, tilted toward the junction axis.

In proximity of the openings and the seats the gasket extends toward the outside of the junction by way of circumferential edges 93, which extend, adhering to the walls of said seats 23", in a direction substantially perpendicular to the junction's longitudinal axis.

In a different embodiment shown in figures 34-36, the gasket 13 is shaped and extends as a crown beyond the mouth rim 11' of the junction such that it covers it, achieving on the outside a couple of concentric rings respectively outside 103 and inside 101, said outside ring 103 extending into a portion 104 to cover a portion of body along the outer side while the gasket 13, extending toward the inside, has a lug 102 of substantially circular section.

In proximity of the seats 23", such lug 102 extends through the openings 23 toward the outside and rejoins the portion 104 set on the outside of the body of the junction.

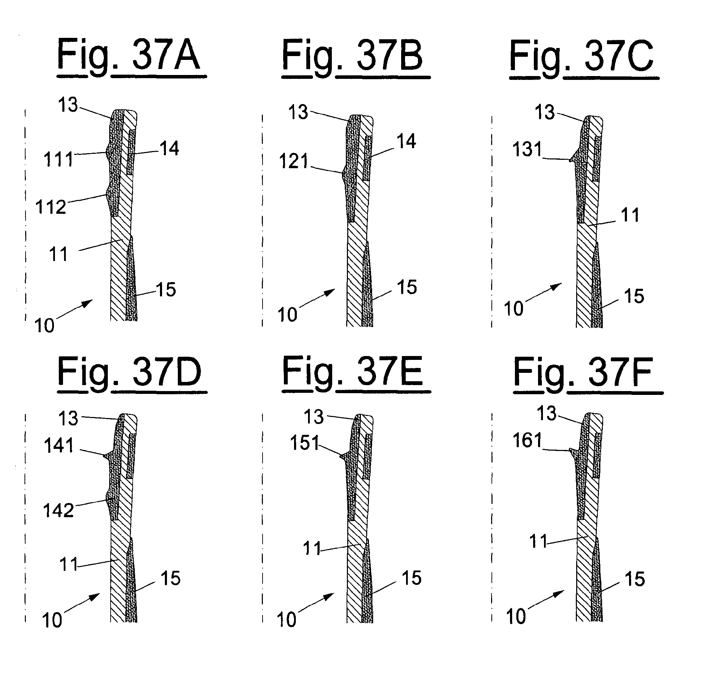

In figures 37A-37F, six walls of tube connection elements 10 of sleeve 1, 1' are schematically illustrated in partial section, equipped with as many embodiments of the gasket 13 according to the invention, provided with or lacking outer cavities in proximity with the heads 14', i.e. respectively provided with or lacking windows intended for the dilation of the gasket in proximity of the seat 23"; in such embodiments it is therefore foreseen the collar 14 on the outside.

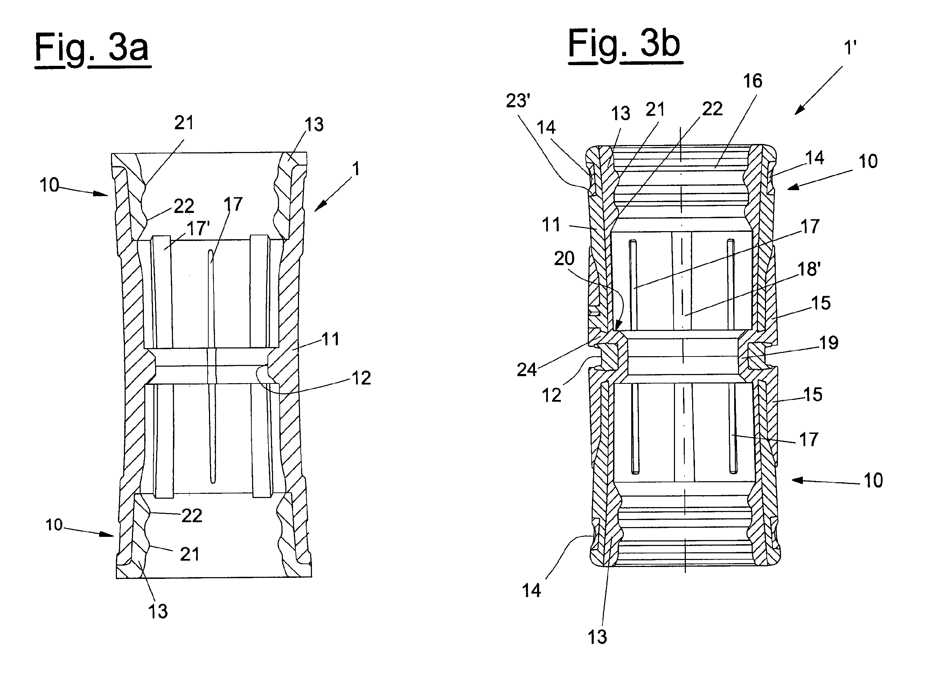

In figure 37A, a gasket is shown with two lugs 111 and 112 of substantially semicircular section; in particular it is observed that such embodiment in the case of the presence of windows coincides with the form illustrated in figures 3 and 4.

In figure 37B, a gasket equipped with a single lug 121 of substantially semicircular form is illustrated.

In figure 37C, a gasket equipped with a single lug 131 with tooth oriented toward the inside of the junction is illustrated.

In figure 37D, a gasket is illustrated equipped with a lug 141 with tooth oriented horizontally and set in proximity of the outer edge of the junction and of a lower lug of semicircular section 142.

In figure 37E, a gasket equipped with a single lug 151 with tooth oriented horizontally is illustrated.

In figure 37F, a gasket equipped with a single lug 161 with tooth oriented toward the outside of the junction is illustrated.

With reference to figure 38, the detail of the sheath side of the sleeve 30, 30' is schematically illustrated, in which in addition to the structural body 32 and short tube 33 a bottom portion 39' of the gasket is visible, set between short tube and structural body in proximity of their union.

In figure 39 the same detail of figure 38 is illustrated with a different embodiment constituted by a threading 34A made of the same material as the gasket 13, preferably in thermoplastic rubber, achieved on the outer surface of the short tube 33, also of the same material of the gasket 13, in such a manner increasing the IP seal level.

Advantageously, thanks to the system of junctions according to the invention, it is possible to obtain values of protection higher than IP 65 and attain, when necessary, IP values 67 or 68.

## Claims

1. System of junctions for the connection of protective elements for electro-technical use, each junction (1, 1', 2, 2', 30, 30', 40, 40', 50, 50') of the system comprising a body (11, 32) in plastic material and a gasket (13, 34) in elastomeric material or in thermoplastic elastomer, **characterized in that** the body (11, 32) and the gasket (13, 34) integrated through adhesion guaranteed by chemical affinity between the materials such that it forms a connection that achieves the mechanical seal and prevents the entrance of external agents.

2. System of junctions according to claim 1, in which said junctions (1, 1', 2, 2', 30, 30', 40, 40', 50, 50') of the system have said body (11, 32) and said gasket (13, 34) integrated through adhesion additionally guaranteed by interlocking engagement of the gasket in the body in plastic material.

3. System of junctions according to claim 1, in which said tube-tube junction or sleeve (1, 1') provided for the connection between rigid tubes (4) and/or corrugated tubes (7) presents said hollow, cylindrical body (11) symmetric with respect to the median plane and comprises, achieved in a single piece, two connection tube elements (10) on opposite ends of and united by a neck (12).

4. System of junctions according to claim 3, in which the gasket (13) has a first lug (21) and a second lug (22) in the shape of rings of semicircular section set spaced along the direction of the junction's longitudinal axis, thereby achieving a double seal.

5. System of junctions according to claim 2, in which said tube-tube junction or sleeve (1, 1') provided for the connection between rigid tubes (4) and/or corrugated tubes (7) presents said hollow, cylindrical body (11) symmetric with respect to the median plane and comprises, achieved in a single piece, two connection tube elements (10) on opposite ends of and united by a neck (12).

6. System of junctions according to claim 5, in which the body (11) of the sleeve (1, 1') is provided with a circumferential slot (23') adapted to house a collar (14) of elastomeric material or thermoplastic elastomer, connected to the gasket (13) by way of openings (23) made in the groove to guarantee a greater integration of the gasket with the body (11).

7. System of junctions according to claim 6, in which each opening (23) is surrounded by a seat (23") adapted to receive the gasket's constituent material thereby achieving a shank (14") of connection between the inside and outside of the body on which the gasket is formed, said shank (14") terminating in a head (14') which engaging itself in said seat (23" ) opposes the rotation the collar (14) within the groove (23).

8. System of junctions according to claim 7, in which the gasket (13) has a first lug (21) and a second lug (22) in the shape of rings of semicircular section set spaced along the direction of the junction's longitudinal axis, thereby achieving a double seal.

9. System of junctions according to claim 8, in which the gasket (13) has on the back of the first lug (21), in proximity of the openings (23) and of the seats (23"), the hollow heads (14').

10. System of junctions according to claim 5, in which the gasket (13) has a single annular lug (61) of trapezoidal section which substantially extends to cover the entire surface of the seat (23" ) .

11. System of junctions according to claim 5, in which the gasket (13) has two annular lugs (71) and (72), overlapped in longitudinal sense and separated by a recess (73) directed toward the outside of the seat (23"), achieving an "Σ"-shaped section, i.e. like the Greek letter sigma.

12. System of junctions according to claim 5, in which the body (11) of the junction has an enlarged mouth rim (11'), inside of which the gasket (13) has a first annular portion (81) adhering to the inner surface of said mouth rim (11') and an annular lip (82) which extends inside said first annular portion of the gasket, tilted toward the junction axis, thereby achieving a substantially "V" profile.

13. System of junctions according to claim 5, in which the body (11) of the junction has an enlarged mouth rim (11'), inside of which the gasket (13) has a single annular lip (91) which extends inside, tilted toward the junction axis.

14. System of junctions according to claim 5, in which the gasket (13) extends as a crown beyond the mouth rim (11') of the body (11) thereby covering it and externally achieving a couple of concentric rings, respectively outside (103) and inside (101), said external ring stretching into a portion (104) adapted to cover a portion of body along the outer side while the gasket (13), extending toward the inside has a lug (102) of substantially circular section.

15. System of junctions according to claim 14, in which such lug (102) extends through the openings (23) toward the outside of the body (11) and rejoins the portion (104).

16. System of junctions according to claim 5, in which the gasket (13) is equipped with a single lug (121) of substantially semi-circular section.

17. System of junctions according to claim 5, in which the gasket (13) is equipped with a single lug (131) with tooth oriented toward the interior of the junction.

18. System of junctions according to claim 5, in which the gasket (13) is equipped with a lug (141) with tooth oriented horizontally and set in proximity of the outer edge of the junction and a lower lug of semicircular section (142).

19. System of junctions according to claim 5, in which the gasket (13) is equipped with a single lug (151) with tooth oriented horizontally.

20. System of junctions according to claim 5, in which the gasket (13) is equipped with a single lug (161) with tooth oriented toward the outside of the junction.

21. System of junctions according to claim 5, in which the gasket (13) extends inside the junction in the direction of the neck (12) of connection between the tube connection elements (10), determining a bottom portion (24) adapted to cover a projection (20) thereby obtaining a stop for the inserted tube (4, 7).

22. System of junctions according to claim 5, in which said body (11) is also equipped with longitudinal slits (18') for the passage of the elastomeric material for the achievement of chamfer-shaped reliefs (15) to render the junction grip ergonomic.

23. System of junctions according to claim 5, in which inside the body (11) longitudinal sections (17) are achieved in relief, serving as guide for the tube (4, 7) during the insertion.

24. System of junctions according to claim 1 or 2, in which a curved tube-tube junction (2, 2') is foreseen to join, preferably at 90°, 45° or 30°, two sections of rigid tube (4) and/or corrugated tube (7).

25. System of junctions according to claim 22, said curved tube-tube junction (2, 2') comprises a section of curved tube (3), each end of which having a tube connection element (10), said curved tube-tube junction (2, 2') being achieved in a single piece.

26. System of junctions according to claim 1 or 2, in which a tube - spiralled sheath junction (30, 30') is foreseen, intended to connect a rigid tube (4) or a corrugated tube (7) to a spiralled sheath (5), said tube - spiralled sheath junction (30, 30') comprising, connected between them and achieved in a single piece, the tube connection element (10) at one end and a sheath connection element (31) at the other end.

27. System of junctions according to claim 26, in which the sheath connection element (31) comprises a structural body (32) in resistant plastic material, equipped on the inside with a short tube (33) in concentric position, partially covered by the gasket (34).

28. System of junctions according to claim 27, in which the gasket (34) is set through a plurality of longitudinal slits (36) achieved in the short tube (33), thereby covering the outer end (38) of the short tube (33), leaving free sections of the short tube defined between adjacent slits (36).

29. System of junctions according to claim 26, in which the gasket (34) presents, outside of the structural body (32), reliefs (37) arranged along the outer surface of the structural body (32).

30. System of junctions according to any one of the claims from 26 to 29, in which said short tube (33) is equipped on its outer surface with a threading (34a) achieved in the same material of the gasket (13), preferably in thermoplastic rubber.

31. System of junctions according to claim 1 or 2, in which a spiralled sheath - box junction (40, 40') and a tube - box junction (50, 50') are foreseen, adapted to permit the connection of a box or a panel (9) for electrotechnical use, respectively with a sheath (5) and with a tube (4, 7).

32. System of junctions according to claim 31, in which said spiralled sheath - box junction (40, 40') and said tube - box junction (50, 50') provide a hollow threaded portion (44) adapted to be inserted within the box for the locking, the seal of the clamping being assured by an elastic washer (43) integrated in the junction and set around the hollow threaded portion.
